# EUROPEAN PATENT APPLICATION

(11) **EP 4 625 969 A1**
(43) Date of publication of application: **01.10.2025**
(21) Application number: 25167038.6
(22) Date of filing: 28.03.2025
(51) Int. Cl.: H04N 7/18, H04L 9/40

(54) **AGENT PROCESS FOR AUTOMATING CONFIGURATION OF MULTIPLE CAMERAS IN A NETWORKED VIDEO MANAGEMENT SYSTEM**

(30) Priority: 28.03.2024 US 202463570963 P; 27.03.2025 US 202519092225
(71) Applicant: Tyco Fire & Security GmbH, 8212 Neuhausen am Rheinfall (CH)
(72) Inventor: LAWRENCE, Peter, Lisburn (GB); NEILL, Terence, Lisburn (GB); SANTHOSHKUMAR, Rejani, Belfast (GB)
(74) Representative: Meissner Bolte Nürnberg

(57) **Abstract**

Systems and methods are disclosed for distributing configuration updates to multiple cameras operating on a network. An agent process executing on a node of a video management system can discover multiple cameras connected to a same subnetwork accessible by the agent process, where the agent process can be configured to execute on at least a controller camera of the video management system. The agent process can provide a configuration update to the controller camera for distribution to each of the multiple cameras.

## Description

The present Application for Patent claims priority to U.S Patent Application No. 19/092,225, entitled "AGENT PROCESS FOR AUTOMATING CONFIGURATION OF MULTIPLE CAMERAS IN A NETWORKED VIDEO MANAGEMENT SYSTEM" filed March 27, 2025 and Provisional Patent Application No. 63/570,963, entitled "AGENT PROCESS FOR AUTOMATING CONFIGURATION OF MULTIPLE CAMERAS IN A NETWORKED VIDEO MANAGEMENT SYSTEM" filed March 28, 2024, which are assigned to the assignee hereof and hereby expressly incorporated by reference herein for all purposes.

The present disclosure relates to cameras deployed within an area, and more particularly to the cameras that are associated with a video management system that provides video data in an enterprise network.

Many areas, such as areas within a building, have cameras deployed for various purposes, such as providing video data to an enterprise network. Security personnel can use the video data to surveil the area using a computer or other device connected to the enterprise network to receive and/or playback the video data. In other examples, the video data can be used by automated systems to identify people occupying the area, provide access to an area based on identifying people, detect activities or incidents occurring in the area, trigger security notifications based on the activities or incidents, etc. Each camera is connected to the enterprise network and managed by a video management system that includes one or more network video recorders that can communicate with the cameras to receive the video data.

Embodiments according to the invention are defined in particular in the appended claims. This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

In an aspect, a node of a video management system is provided that includes one or more processors, one or more memories coupled with the one or more processors, and instructions stored in the one or more memories. The instructions are operable, when executed by the one or more processors, to cause the node to discover, by an agent process executing on the node, multiple cameras connected to a same subnetwork accessible by the agent process, wherein the agent process is configured to execute on at least a controller camera of the video management system, and provide, by the agent process, a configuration update to the controller camera for distribution to each of the multiple cameras.

**In** another aspect, a method for distributing configuration updates to multiple cameras operating on a network is provided that includes discovering, by an agent process executing on a node of a video management system, multiple cameras connected to a same subnetwork accessible by the agent process, wherein the agent process is configured to execute on at least a controller camera of the video management system, and providing, by the agent process, a configuration update to the controller camera for distribution to each of the multiple cameras.

**In** another aspect, cameras, devices, or systems are provided that includes various hardware, software, or other components for distributing configuration updates to multiple cameras using one or more methods described herein. In another aspect, a computer-readable medium is provided herein that stores computer executable instructions for distributing configuration updates to multiple cameras using one or more methods described herein.

Further aspects of the present disclosure are described in more details below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates an example of a video management system that includes or communicates with various nodes to receive video data from multiple cameras where one camera can execute an agent process, in accordance with aspects described herein;
FIG. 2 illustrates another example of the video management system that includes or communicates with various nodes to receive video data from multiple cameras where one network video recorder (NVR) can execute an agent process, in accordance with aspects described herein;
FIG. 3 illustrates another example of the video management system that includes or communicates with various nodes to receive video data from multiple cameras where a node of the video management system can execute an agent process, in accordance with aspects described herein;
FIG. 4 is a schematic diagram of an example of a system including a video management system node for configuring cameras over an enterprise network, in accordance with aspects described herein; and
FIG. 5 is a flowchart of an example of a method for providing configuration updates to multiple cameras, in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Cameras are often deployed in certain areas, such as areas within a building, for various purposes, such as video surveillance, subject identification/authentication, activity detections, etc. The cameras can communicate with a network video recorder and/or other nodes of a video management system to provide captured video thereto for further processing. Various configuration tasks for the cameras can typically be a manual process that requires an administrator to access each camera individually. This process can be burdensome for the administrator especially for a large number of cameras configured on a given network. Such configuration tasks can include certificate management, firmware updates, or setting certain configuration parameter values. Aspects described herein relate to providing an agent process that can execute on one or more nodes of the video management system to automate certain configuration tasks.

For example, the agent process can include a certificate authority agent that can discover cameras that are installed and operating on a given network and can automatically generate and provide certificates to the cameras. In one example, the agent process can execute on one of the cameras that acts as a controller camera to discover the other cameras (e.g., on a same subnetwork as the controller camera) and generate and provide certificates thereto. In another example, the agent process can execute on a higher-level node that can be associated with multiple subnetworks, such as a network video recorder (NVR) that can access multiple sets of cameras on multiple subnetworks. In another example, the agent process can execute on a video management system node that manages multiple NVRs, etc. In some examples, the agent process can migrate among the different nodes based on the network configuration and/or multiple nodes can include the agent process to provide redundancy for failover or other purposes.

In the various examples described herein, distributed device management can be provided (e.g., management of certificates, firmware updates, configuration settings) from within the video management system, without the need to purchase additional hardware. For example, for certificate management, the agent process can be provided as a standalone system or integrated into existing Certificate Authority infrastructure. For firmware updates, the agent process can lower network pressure due to significantly less data being shared external to camera network, can allow cameras to distribute and schedule updates, and can add a level of security as only the controller camera may require access to the external network. For configuration settings, the agent process can allow for new cameras to automatically download site specific default settings to reduce manual configuration by administrators.

Turning now to the figures, example aspects are depicted with reference to one or more modules or components described herein, where modules or components in dashed lines may be optional.

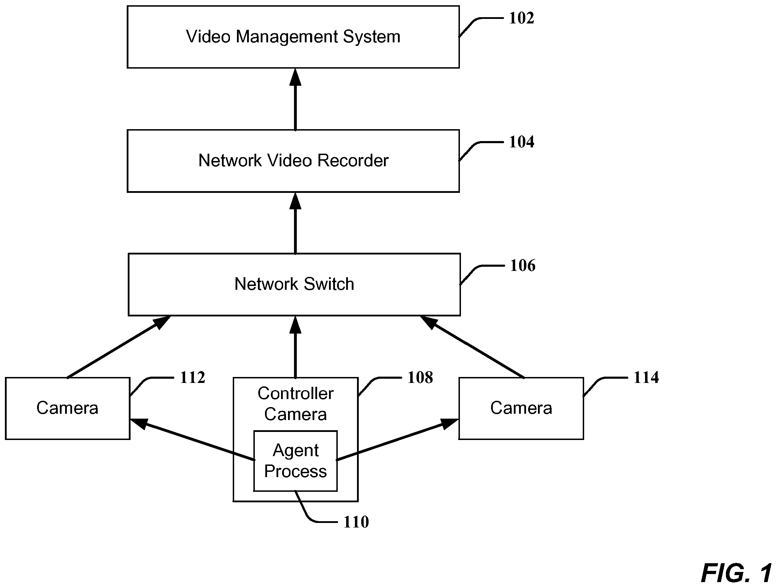

Referring to FIG. 1, an example of a video management system 102 is shown that includes or communicates with various nodes to receive video data from multiple cameras where one camera can execute an agent process, in accordance with aspects described herein. For example, the video management system 102 can communicate with an NVR 104 that can receive video data, audio data, metadata, etc. from multiple cameras 108, 112, and/or 114, via a network switch 106 with which the NVR and cameras 108, 112, and/or 114 can be communicatively coupled. The multiple cameras 108, 112, and/or 114 can be red, green, blue (RGB) cameras, infrared cameras, depth cameras, etc., and the multiple cameras 108, 112, and/or 114 can communicate with one another via the network switch 106. In this regard, for example, the multiple cameras 108, 112, and/or 114 can be network-enabled such that they are configured with network hardware for communicating with other network-enabled devices, such a network interface card that is communicatively coupled to the network switch 106 by a wired or wireless connection. The multiple cameras 108, 112, and/or 114 can each capture video data, audio data, and/or associated metadata that the multiple cameras 108, 112, and/or 114 can each provide upstream to the NVR 104 via the network switch 106.

As described, when the multiple cameras 108, 112, and/or 114 are connected to the network switch 106, a user can configure the multiple cameras 108, 112, and/or 114 using a manual configuration process, which may include generating a certificate for the camera to verify authenticity of its source, updating firmware on the camera, setting one or more configuration parameters for the camera to a desired value, etc. Aspects described herein relate to providing an agent process 110 to automate one or more of the foregoing tasks for various cameras discovered on the network (e.g., without requiring user intervention). As shown in FIG. 1, the agent process 110 can execute on the controller camera 108 and can communicate with the cameras 112 and 114 (and/or 108) to provide a certificate, firmware update, configuration setting modification, etc. thereto. In various examples described herein, the agent process 110 can discover the multiple cameras 112 and 114 (and/or 108) and can automatically update the configuration for each camera.

In the example shown in FIG. 1, the multiple cameras 108, 112, and/or 114 can be on the same subnetwork and can communicate with one another via the same network switch 106. In this example, the agent process 110 can be deployed to one of the cameras 108. In an example, any of the multiple cameras 108, 112, and/or 114 can be capable of providing the agent process 110, and one of the cameras, referred to herein as the controller camera 108, can be configured to provide the agent process 110. In an example, the controller camera 108 can be specified or configured manually or automatically. In one example, the multiple cameras 108, 112, and/or 114 may negotiate which of the cameras 108, 112, or 114 is assigned as the controller camera. In another example, the controller camera 108 can configure itself as the controller camera (e.g., the camera that executes the agent process 110) based on detecting that it is the first (e.g., only) camera on the subnetwork, etc. For example, the agent process 110 can provide the configuration updates to discovered cameras based on the agent process 110 receiving the configuration update and/or based on the agent process 110 discovering a camera added to the same subnetwork as the controller camera 108 (e.g., in which case the agent process 110 can send a most recent configuration or a series of most recent configuration updates to the newly added camera).

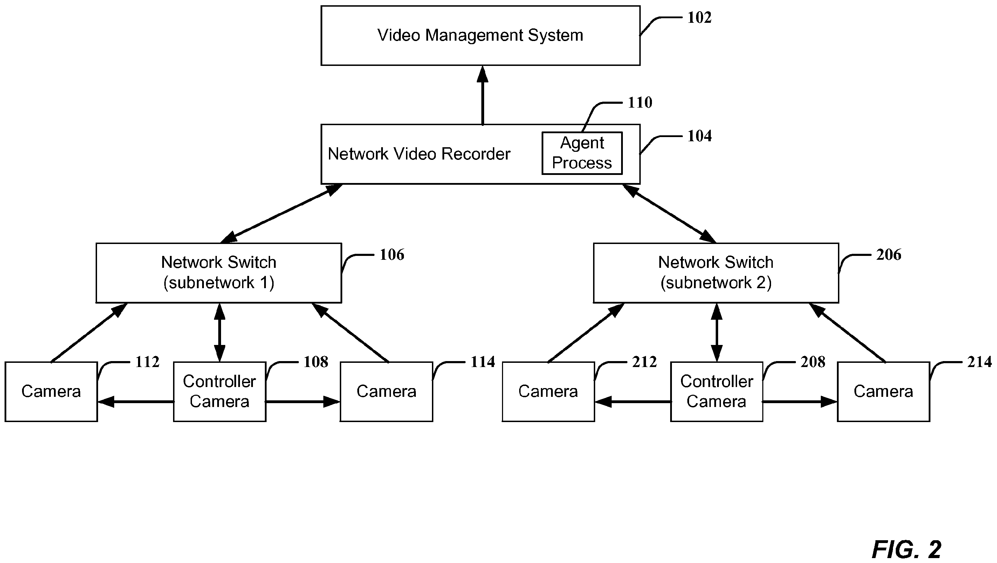

Referring to FIG. 2, another example of the video management system 102 is shown that includes or communicates with various nodes to receive video data from multiple cameras where one NVR can execute an agent process, in accordance with aspects described herein. For example, the video management system 102 can communicate with an NVR 104 that can receive video data, audio data, metadata, etc. from multiple cameras 108, 112, 114, 208, 212, and/or 214, on multiple subnetworks, via multiple network switches 106 and 206. The multiple cameras 108, 112, and/or 114 can each capture video data, audio data, and/or associated metadata that the multiple cameras 108, 112, and/or 114 can each provide upstream to the NVR 104 via the network switch 106. The multiple cameras 208, 212, and/or 214 can each capture video data, audio data, and/or associated metadata that the multiple cameras 208, 212, and/or 214 can each provide upstream to the NVR 104 via the network switch 206.

As shown in FIG. 2, the agent process 110 can execute on the NVR 104 and can communicate with the controller camera 108 via network switch 106 to provide a certificate, firmware update, configuration setting modification, etc. to cameras 112 and 114. The agent process 110 can also communicate with the controller camera 208 via network switch 206 to provide a certificate, firmware update, configuration setting modification, etc. to cameras 212 and 214. In various examples described herein, the agent process 110 can discover the multiple cameras 108, 112, 114, 208, 212, and 214 on the different subnetworks provided by network switches 106 and 206 and can automatically update the configuration for each camera. In an example, the agent process 110 can identify the controller cameras 108 and 208 in each subnetwork and can provide the configuration updates to the appropriate controller camera for distribution, by the controller camera, to the other cameras in the associated subnetwork. For example, the agent process 110 can provide the configuration updates for cameras 112 and 114 (and/or 108) to controller camera 108, and/or can provide the configuration updates for cameras 212 and 214 (and/or 208) to controller camera 208. For example, the agent process 110 can provide the configuration updates to discovered cameras based on the agent process 110 receiving the configuration update and/or based on the agent process 110 discovering a camera added to the network or subnetwork under the NVR 104 (e.g., in which case the agent process 110 can send a most recent configuration or a series of most recent configuration updates to the newly added camera).

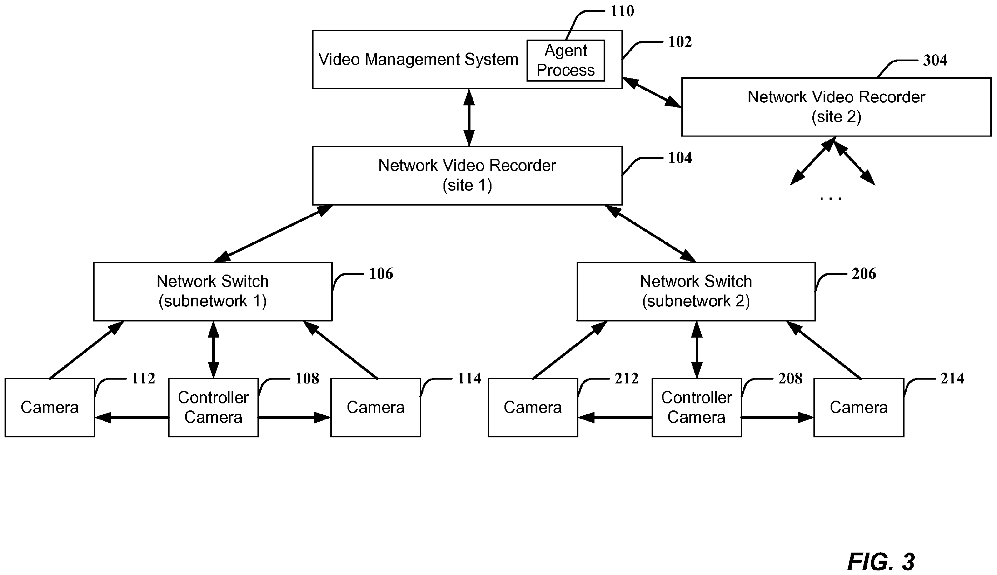

Referring to FIG. 3, another example of the video management system 102 is shown that includes or communicates with various nodes to receive video data from multiple cameras where a node of the video management system 102 can execute an agent process, in accordance with aspects described herein. For example, the video management system 102 can communicate with an NVR 104 at a first site that can receive video data, audio data, metadata, etc. from one or more cameras 108, 112, 114, 208, 212, and/or 214, on multiple subnetworks, via one or more network switches 106 and/or 206. The video management system 102 can also communicate with another NVR 304 at a second site that can receive video data, audio data, metadata, etc., from one or more cameras on one or more subnetworks via one or more network switches (not shown for ease of explanation).

As shown in FIG. 3, the agent process 110 can execute on a node of the video management system 102 that can communicate with the multiple NVRs 104 and 304 to provide a certificate, firmware update, configuration setting modification, etc. to multiple cameras managed by the multiple NVRs 104 and 304. The agent process 110 can also communicate with controller cameras 108 and 208 and/or other controller cameras accessible at other sites and/or via other subnetworks, to provide a certificate, firmware update, configuration setting modification, etc. to cameras within the subnetwork of the controller camera. In various examples described herein, the agent process 110 executing on a node of the video management system 102 can discover the multiple cameras 108, 112, 114, 208, 212, and 214 on the different subnetworks provided by network switches 106 and 206 accessible by NVR 104 and/or other cameras accessible by NVR 304, and the agent process 110 can automatically update the configuration for each camera. In an example, the agent process 110 can identify the controller cameras 108 and 208 in each subnetwork and can provide the configuration updates to the appropriate control camera for distribution to the other cameras in the associated subnetwork. For example, the agent process 110 can provide the configuration updates to discovered cameras based on the agent process 110 receiving the configuration update and/or based on the agent process 110 discovering a camera added to the network (e.g., in which case the agent process 110 can send a most recent configuration or a series of most recent configuration updates to the newly added camera).

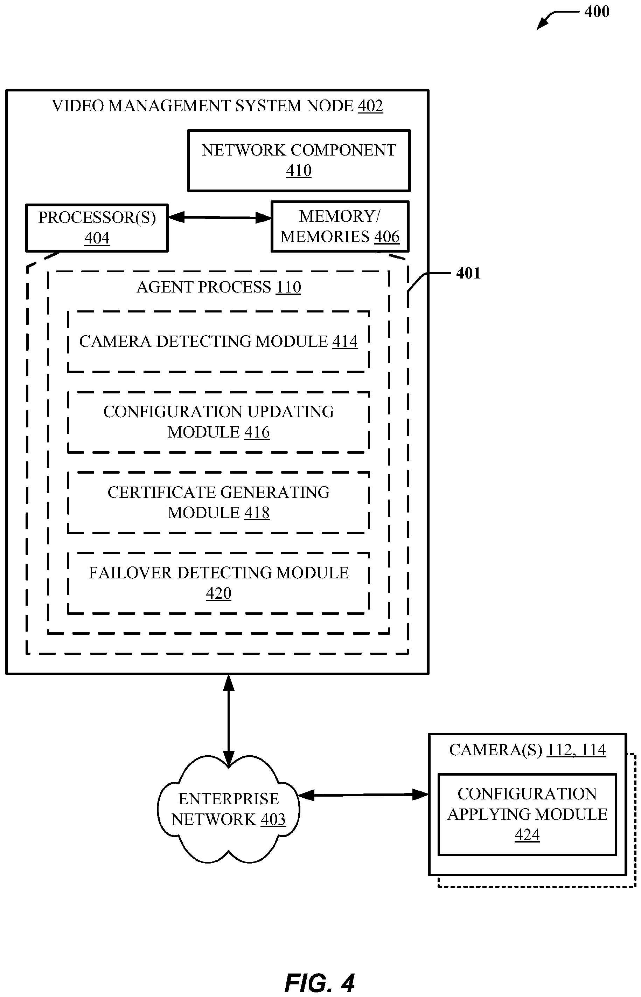

FIG. 4 is a schematic diagram of an example of a system 400 including a video management system node 402 for configuring cameras 112, 114 over an enterprise network 403, in accordance with aspects described herein. In an example, video management system node 402 can include a controller camera 108, NVR 104, or another node in a video management system 102, as described herein, that can communicate with cameras 112, 114 in the enterprise network 403. Video management system node 402 can include or can otherwise be coupled with one or more processors 404 and/or a memory or memories 406, where the processor(s) 404 and/or memory/memories 406 can be configured to execute or store instructions or other parameters related to an agent process 110 for distributing configuration updates to one or more cameras 112, 114 via one or more components of the enterprise network 403. For example, processor(s) 404 and memory/memories 406 may be separate components communicatively coupled by a bus (e.g., on a motherboard or other portion of a computing device, on an integrated circuit, such as a system on a chip (SoC), etc.), components integrated within one another (e.g., processor(s) 404 can include the memory/memories 406 as an on-board component 401), and/or the like. Memory/memories 406 may store instructions, parameters, data structures, etc., for use/execution by processor(s) 404 to perform functions described herein.

For example, video management system node 402 can also include a network component 410 for communicating with the enterprise network 403 over a backend wired or wireless connection. Network component 410 can include a network port (e.g., Ethernet port) for a wired connection to the enterprise network 403, a WLAN connection for wireless connection to the enterprise network 403, and/or the like. In addition, cameras 112, 114 may similarly include processor(s) 404, memory/memories 406, network component 410, etc. to facilitate receiving configuration updates over the enterprise network 403.

In an example, agent process 110 can provide various modules executing functionality described herein to discover cameras, distribute updates to the cameras, etc. For example, agent process 110 can include one or more of a camera detecting module 414 for detecting cameras 112, 114 on the enterprise network 403, a configuration updating module 416 for generating a configuration update for the discovered cameras 112, 114 and/or distributing the configuration update to the discovered cameras 112, 114, a certificate generating module 418 for generating a certificate for the discovered cameras 112, 114 and/or distributing the certificate to the discovered cameras 112, 114, and/or a failover detecting module 420 for detecting failure of an agent process on an upstream node and/or activating agent process 110 based on the detected failure.

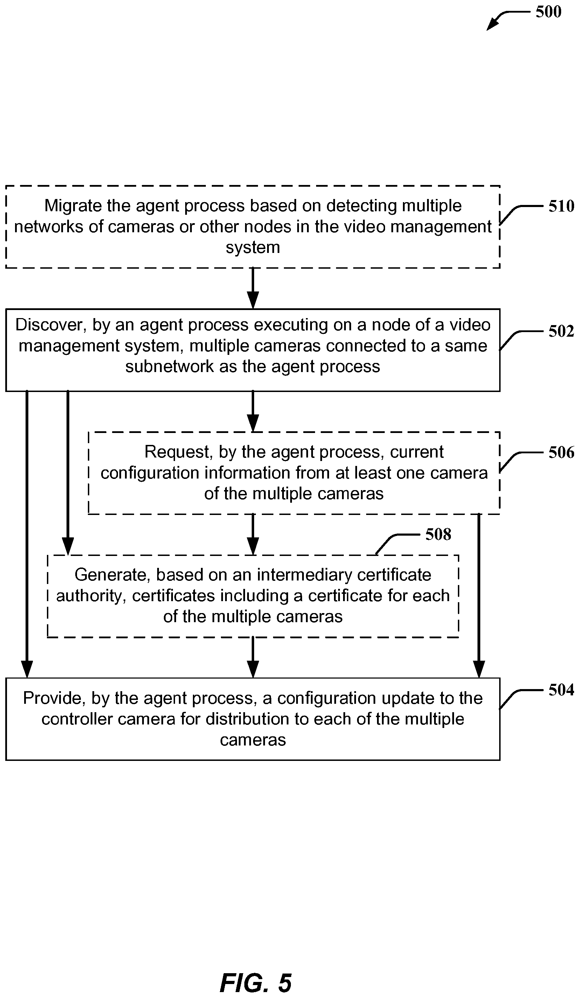

Referring to FIG. 5, an example of a method 500 for providing configuration updates to multiple cameras is depicted, in accordance with aspects described herein. The operations of the method 500 may be performed by one or more modules or components of the video management system node 402, as described herein.

At 502, the method 500 may include discovering, by an agent process executing on a node of the video management system, multiple cameras connected to a same subnetwork accessible by the agent process. In an example, camera detecting module 414, e.g., in conjunction with the one or more processors 404, memory/memories 406, network component 410, agent process 110, etc., can discover, by the agent process (e.g., agent process 110) executing on the node of the video management system (e.g., a node of video management system 102, such as a controller camera 108, NVR 104, another node of the video management system 102, etc., as described herein), multiple cameras (e.g., cameras 112, 114) connected to a same subnetwork accessible by the agent process. In an example, agent process 110 can discover cameras 112, 114 when the agent process 110 is initialized, as new cameras are added to a subnetwork accessible by the agent process 110, etc. As described herein, the agent process 110 can be configured to execute at one or more of a controller camera 108, NVR 104, or another node of a video management system 102, etc.

In an example, agent process 110 executing on a controller camera 108 can discover the cameras 112, 114 based on information received from the subnetwork or the NVR (e.g., when a new camera is added to the subnetwork, such as when the new camera requests or is assigned a network address), based on the cameras 112, 114 locating the controller camera 108 (e.g., as part of cameras 112, 114 initializing once connected to the network or otherwise), based on cameras 108, 112, 114 negotiating camera 108 as the controller camera, and/or the like. In one example, as described, cameras 108, 112, 114, installed on the subnetwork can negotiate camera 108 as being the controller camera 108, and/or camera 08 can set its status as a controller camera 108 based on being a first camera installed on the subnetwork (e.g., based on controller camera 108 not detecting any other cameras on the subnetwork). In other examples, where agent process 110 is executing on a node above the cameras, such as an NVR 104 or other node of the video management system 102, agent process 110 can discover cameras in multiple subnetworks, at multiple sites under multiple NVRs, etc., as described herein (e.g., based on querying connected devices, based on connected devices initializing with the network or requesting/receiving a network address, etc.). In an example, agent process 110 can maintain an inventory of cameras to receive configuration updates from the agent process 110.

At 504, the method 500 may include providing, by the agent process, a configuration update to the controller camera for distribution to each of the multiple cameras. In an example, configuration updating module 416, e.g., in conjunction with the one or more processors 404, memory/memories 406, network component 410, agent process 110, etc., can provide, by the agent process (e.g., agent process 110), the configuration update to the controller camera (e.g., controller camera 108) for distribution to each of the multiple cameras (e.g., cameras 112, 114). As described, for example, the agent process 110 may execute on the controller camera 108 and may provide, via configuration updating module 416, the controller camera 108 with the configuration update for distributing to the cameras 112, 114 discovered by the agent process 110. In other examples, the agent process 110 may execute on other nodes above the controller camera 108 (e.g., NVR 104, another node of the video management system 102, etc.), and may also provide, via configuration updating module 416, configuration updates intended for cameras 112, 114 (and/or 108) to the controller camera 108 for distributing to the intended cameras.

For example, the cameras 112, 114 can receive the configuration update from the agent process 110 (e.g., via a controller camera, as described) and can apply the configuration update (e.g., via configuration applying module 424). For example, configuration applying module 424 can receive the configuration update as a new certificate for the camera, and configuration applying module 424 can replace a previous certificate with the new certificate. In one example, this can be based on the camera providing expired certificate information to the agent process 110, as described further herein. In another example, configuration applying module 424 can receive the configuration update as a firmware package to be deployed at the camera, and configuration applying module 424 can automatically deploy the firmware package. In yet another example, configuration applying module 424 can receive the configuration update as a modification to a configuration parameter, and configuration applying module 424 can accordingly modify the associated configuration parameter value based on the configuration update.

At 506, the method 500 may optionally include requesting, by the agent process, current configuration information from at least one camera of the multiple cameras. In an example, configuration updating module 416, e.g., in conjunction with the one or more processors 404, memory/memories 406, network component 410, agent process 110, etc., can request, by the agent process (e.g., agent process 110), the current configuration information from the at least one camera of the multiple cameras (e.g., cameras 112, 114). For example, configuration updating module 416 can request for current certificate information, current firmware version, current configuration settings, etc. from the at least one camera. For example, the agent process 110 can periodically poll the cameras for this information. Based at least in part on this information, for example, configuration updating module 416 can determine whether to generate a configuration update for the at least one camera. For example, the configuration information may indicate the certificate is expired, the firmware is a previous version, etc., based on which configuration updating module 416 can generate a new certificate for the camera, obtain the current firmware package for providing the camera, etc.

At 508, the method 500 may optionally include generating, based on an intermediary certificate authority, certificates including a certificate for each of the multiple cameras. In an example, certificate generating module 418, e.g., in conjunction with the one or more processors 404, memory/memories 406, network component 410, agent process 110, etc., can generate, based on the intermediary certificate authority, the certificates including a certificate for each of the multiple cameras (e.g., cameras 112, 114). As described, for example, the agent process 110 can be a certificate authority agent process executing on the controller camera 108 or other node, which can generate certificates for the discovered cameras in the subnetwork (e.g., upon discovery, based on receiving certificate information indicating expired certificate, based on a request from the camera, etc.). In an example, the certificate authority agent process can be deployed as a root certificate authority or can otherwise be granted intermediary certificate authority privileges via an existing root certificate authority to generate the certificates for the cameras.

In an example, an administrator can enable the certificate authority agent process on the controller camera 108, on the NVR 104, on the node of the video management system 102, or substantially any node that can execute an agent process 110, and can provide the intermediate certificate authority thereto to allow the certificate authority agent process to generate certificates on behalf of a manufacturer of the cameras. As described, for example, the certificate authority agent process can then discover any cameras connected to the network/subnetwork, request certificate information, etc., and can generate new certificates for one or more cameras and provide the new certificates to the cameras. In an example, the certificate authority agent process can periodically query the cameras for the certificate information or can store and track a valid time period for each certificate to facilitate updating a certificate for a camera when the valid time period expires.

The cameras 112, 114 can receive the certificates via configuration applying module 424 and can update the certificate stored on the camera 112, 114 for providing to nodes requesting access to video from the cameras 112, 114, such as NVR 104, video management system 102, nodes accessing the NVR 104 or video management system 102, etc. A node receiving the certificate can verify the authenticity of the video data, audio data, metadata, etc. coming from the camera by receiving the certificate and verifying the certificate with a certificate authority. For example, the certificate can correspond to the manufacturer of the camera, which can be based on the intermediate certificate authority, the root certificate authority, etc. as described herein. In addition, in an example, configuration applying module 424 of the camera 112, 114 receiving the certificate can authenticate the certificate before storing the certificate in its memory for subsequently providing to a node with requested video data, audio data, metadata, etc. For example, the configuration applying module 424 can authenticate the certificate using a private or public key configured in the configuration applying module 424 for the manufacturer.

At 510, the method 500 may optionally include migrating the agent process based on detecting multiple networks of cameras or other nodes in the video management system. In an example, failover detecting module 420, e.g., in conjunction with the one or more processors 404, memory/memories 406, network component 410, agent process 110, etc., can migrate the agent process (e.g., agent process 110) based on detecting multiple networks of cameras or other nodes in the video management system. For example, failover detecting module 420 can migrate the agent process 110 to a node downstream a current node (e.g., from a node of the video management system 102 to an NVR 104, from NVR 104 to controller camera(s) 108, 208, etc.) based on detecting a failure of the agent process 110 in the current node. In this example, failover detecting module 420 can enable the agent process 110 in the downstream node based on detecting the failure of the agent process 110 in the upstream node, which can enable the downstream node to assume the functionality of the agent process 110 at least for nodes within the same network/subnetwork of the downstream node.

Similarly, in an example, failover detecting module 420 can migrate the agent process 110 to an upstream node based on detecting network infrastructure that prevents the agent process 110 from serving all cameras in the enterprise network 403. Referring to the examples in FIG. 2, agent process 110 in the controller camera 108 can migrate the agent process 110 to the NVR 104 based on the controller camera 108 detecting that the NVR 104 serves multiple subnetworks of cameras (e.g., based on information received from the NVR 104 or otherwise). Similarly, referring to the examples in FIG. 3, agent process 110 in the NVR 104 can migrate the agent process 110 to the node of the video management system 102 based on the NVR 104 detecting that the node of the video management system 102 serves another NVR 304 having one or more subnetworks of cameras. In some examples, the agent process 110 can remain enabled at the downstream nodes in case of failure of the agent process 110 at an upstream node, as described. Where a previously failed agent process 110 of an upstream node becomes active again, in an example, information from the downstream node (e.g., the controller camera 108) can be pushed up to the agent process 110 of the upstream node (e.g., the NVR 104), which may include any certificates issued to the cameras, certificate information (e.g., valid time periods), firmware version information, configuration settings, etc. to allow the activated agent process 110 to determine when to apply configuration updates to the cameras, which configuration updates to apply, etc.

Some further example aspects are provided below. Any of these examples can be claimed in a separate claim, e.g. by substituting the word "Aspect" by "Claim", in particular in the order as mentioned below and/or in any combination with any embodiment described above or with any of the features of the attached claims:
Aspect 1 is a method for distributing configuration updates to multiple cameras operating on a network including discovering, by an agent process executing on the node, multiple cameras connected to a same subnetwork accessible by the agent process, where the agent process is configured to execute on at least a controller camera of the video management system, and providing, by the agent process, a configuration update to the controller camera for distribution to each of the multiple cameras.
In Aspect 2, the method of Aspect 1 includes generating, based on an intermediary certificate authority, certificates including a certificate for each of the multiple cameras, where the configuration update includes the certificate for each of the multiple cameras.
In Aspect 3, the method of Aspect 2 includes where the node executing the agent process is the controller camera.
In Aspect 4, the method of Aspect 3 includes where the agent process is a certificate authority agent process that generates the certificates based on the certificate authority agent process discovering the multiple cameras in the same subnetwork.
In Aspect 5, the method of Aspect 4 includes requesting, by the certificate authority agent process executing on the controller camera, current certificate information from at least one camera of the multiple cameras, and generating the certificates at least in part by generating a new certificate for the at least one camera based on the current certificate information.
In Aspect 6, the method of Aspect 4 or 5 includes generating the certificates based on the certificate authority agent process receiving, from the multiple cameras, a request for the certificate.
In Aspect 7, the method of any of Aspects 1 to 6 includes where the node executing the agent process is a network video recorder that communicates with the multiple cameras in the same subnetwork and an additional set of multiple cameras in a different subnetwork, and providing, by the agent process, the configuration update to a different controller camera in the different subnetwork for distribution to each camera in the additional set of multiple cameras.
In Aspect 8, the method of Aspect 7 includes where the agent process also executes on the controller camera and the different controller camera as a redundant agent process.
In Aspect 9, the method of any of Aspects 1 to 8 includes where the node executing the agent process is a video management system that communicates with multiple network video recorders that each communicate with a set of cameras, and providing, by the agent process, the configuration update to the multiple network video recorders that each provide the configuration update to the set of cameras.
In Aspect 10, the method of Aspect 9 includes where the agent process also executes on the multiple network video recorders as a redundant agent process.
In Aspect 11, the method of any of Aspects 1 to 10 includes where the configuration update includes a firmware update for each of the multiple cameras.
Aspect 12 is an apparatus including one or more processors, one or more memories coupled with the one or more processors, and instructions stored in the one or more memories and operable, when executed by the one or more processors, to cause the apparatus to perform any of the methods of Aspects 1 to 11.
Aspect 13 is an apparatus including means for performing any of the methods of Aspects 1 to 11.
Aspect 14 is one or more computer-readable media including code executable by one or more processors, the code including code for performing any of the methods of Aspects 1 to 11.
Aspect 15. A node of a video management system, comprising:
   one or more processors;
   one or more memories coupled with the one or more processors; and
   instructions stored in the one or more memories and operable, when executed by the one or more processors, to cause the node to:
      discover, by an agent process executing on the node, multiple cameras connected to a same subnetwork accessible by the agent process, wherein the agent process is configured to execute on at least a controller camera of the video management system; and
      provide, by the agent process, a configuration update to the controller camera for distribution to each of the multiple cameras.
Aspect 16. The node of aspect 15, wherein the instructions, when executed by the one or more processors, to cause the node to generate, based on an intermediary certificate authority, certificates including a certificate for each of the multiple cameras, wherein the configuration update includes the certificate for each of the multiple cameras.
Aspect 17. The node of aspect 16, wherein the node executing the agent process is the controller camera.
Aspect 18. The node of aspect 17, wherein the agent process is a certificate authority agent process that generates the certificates based on the certificate authority agent process discovering the multiple cameras in the same subnetwork.
Aspect 19. The node of aspect 18, wherein the instructions, when executed by the one or more processors, to cause the node to request, by the certificate authority agent process executing on the controller camera, current certificate information from at least one camera of the multiple cameras, wherein the instructions, when executed by the one or more processors, to cause the node to generate the certificates at least in part by generating a new certificate for the at least one camera based on the current certificate information; and/or
   wherein the instructions, when executed by the one or more processors, to cause the node to generate the certificates based on the certificate authority agent process receiving, from the multiple cameras, a request for the certificate.
Aspect 20. The node of any of aspects 15 to 19, wherein the node executing the agent process is a network video recorder that communicates with the multiple cameras in the same subnetwork and an additional set of multiple cameras in a different subnetwork, and wherein the instructions, when executed by the one or more processors, to cause the node to provide, by the agent process, the configuration update to a different controller camera in the different subnetwork for distribution to each camera in the additional set of multiple cameras;
   optionally, wherein the agent process also executes on the controller camera and the different controller camera as a redundant agent process.
Aspect 21. The node of any of aspects 15 to 20, wherein the node executing the agent process is a video management system that communicates with multiple network video recorders that each communicate with a set of cameras, wherein the instructions, when executed by the one or more processors, to cause the node to provide, by the agent process, the configuration update to the multiple network video recorders that each provide the configuration update to the set of cameras;
   optionally, wherein the agent process also executes on the multiple network video recorders as a redundant agent process.
Aspect 22. The node of any of aspects 15 to 21, wherein the configuration update includes a firmware update for each of the multiple cameras.
Aspect 23. A computer-implemented method for distributing configuration updates to multiple cameras operating on a network, comprising:
   discovering, by an agent process executing on a node of a video management system, multiple cameras connected to a same subnetwork accessible by the agent process, wherein the agent process is configured to execute on at least a controller camera of the video management system; and
   providing, by the agent process, a configuration update to the controller camera for distribution to each of the multiple cameras.
Aspect 24. The computer-implemented method of aspect 23, further comprising generating, based on an intermediary certificate authority, certificates including a certificate for each of the multiple cameras, wherein the configuration update includes the certificate for each of the multiple cameras.
Aspect 25. The computer-implemented method of aspect 24, wherein the node executing the agent process is the controller camera.
Aspect 26. The computer-implemented method of aspect 25, wherein the agent process is a certificate authority agent process that generates the certificates based on the certificate authority agent process discovering the multiple cameras in the same subnetwork;
   optionally, further comprising requesting, by the certificate authority agent process executing on the controller camera, current certificate information from at least one camera of the multiple cameras, wherein generating the certificates includes generating a new certificate for the at least one camera based on the current certificate information; and/or
   optionally, wherein generating the certificates is based on the certificate authority agent process receiving, from the multiple cameras, a request for the certificate.
Aspect 27. The computer-implemented method of any of aspects 23 to 26, wherein the node executing the agent process is a network video recorder that communicates with the multiple cameras in the same subnetwork and an additional set of multiple cameras in a different subnetwork, and further comprising providing, by the agent process, the configuration update to a different controller camera in the different subnetwork for distribution to each camera in the additional set of multiple cameras;
   optionally, wherein the agent process also executes on the controller camera and the different controller camera as a redundant agent process.
Aspect 28. The computer-implemented method of any of aspects 23 to 27, wherein the node executing the agent process is a video management system that communicates with multiple network video recorders that each communicate with a set of cameras, wherein providing, by the agent process, the configuration update includes providing the configuration update to the multiple network video recorders that each provide the configuration update to the set of cameras; optionally, wherein the agent process also executes on the multiple network video recorders as a redundant agent process.
Aspect 29. The computer-implemented method of any of aspects 23 to 28, wherein the configuration update includes a firmware update for each of the multiple cameras.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

## Claims

1. A node of a video management system, comprising:
one or more processors;
one or more memories coupled with the one or more processors; and
instructions stored in the one or more memories and operable, when executed by the one or more processors, to cause the node to:
discover, by an agent process executing on the node, multiple cameras connected to a same subnetwork accessible by the agent process, wherein the agent process is configured to execute on at least a controller camera of the video management system; and
provide, by the agent process, a configuration update to the controller camera for distribution to each of the multiple cameras.

2. The node of claim 1, wherein the instructions, when executed by the one or more processors, to cause the node to generate, based on an intermediary certificate authority, certificates including a certificate for each of the multiple cameras, wherein the configuration update includes the certificate for each of the multiple cameras.

3. The node of claim 2, wherein the node executing the agent process is the controller camera.

4. The node of claim 3, wherein the agent process is a certificate authority agent process that generates the certificates based on the certificate authority agent process discovering the multiple cameras in the same subnetwork.

5. The node of claim 4, wherein the instructions, when executed by the one or more processors, to cause the node to request, by the certificate authority agent process executing on the controller camera, current certificate information from at least one camera of the multiple cameras, wherein the instructions, when executed by the one or more processors, to cause the node to generate the certificates at least in part by generating a new certificate for the at least one camera based on the current certificate information; and/or
wherein the instructions, when executed by the one or more processors, to cause the node to generate the certificates based on the certificate authority agent process receiving, from the multiple cameras, a request for the certificate.

6. The node of any of claims 1 to 5, wherein the node executing the agent process is a network video recorder that communicates with the multiple cameras in the same subnetwork and an additional set of multiple cameras in a different subnetwork, and wherein the instructions, when executed by the one or more processors, to cause the node to provide, by the agent process, the configuration update to a different controller camera in the different subnetwork for distribution to each camera in the additional set of multiple cameras;
optionally, wherein the agent process also executes on the controller camera and the different controller camera as a redundant agent process.

7. The node of any of claims 1 to 6, wherein the node executing the agent process is a video management system that communicates with multiple network video recorders that each communicate with a set of cameras, wherein the instructions, when executed by the one or more processors, to cause the node to provide, by the agent process, the configuration update to the multiple network video recorders that each provide the configuration update to the set of cameras;
optionally, wherein the agent process also executes on the multiple network video recorders as a redundant agent process.

8. The node of any of claims 1 to 7, wherein the configuration update includes a firmware update for each of the multiple cameras.

9. A computer-implemented method for distributing configuration updates to multiple cameras operating on a network, comprising:
discovering, by an agent process executing on a node of a video management system, multiple cameras connected to a same subnetwork accessible by the agent process, wherein the agent process is configured to execute on at least a controller camera of the video management system; and
providing, by the agent process, a configuration update to the controller camera for distribution to each of the multiple cameras.

10. The computer-implemented method of claim 9, further comprising generating, based on an intermediary certificate authority, certificates including a certificate for each of the multiple cameras, wherein the configuration update includes the certificate for each of the multiple cameras.

11. The computer-implemented method of claim 10, wherein the node executing the agent process is the controller camera.

12. The computer-implemented method of claim 11, wherein the agent process is a certificate authority agent process that generates the certificates based on the certificate authority agent process discovering the multiple cameras in the same subnetwork;
optionally, further comprising requesting, by the certificate authority agent process executing on the controller camera, current certificate information from at least one camera of the multiple cameras, wherein generating the certificates includes generating a new certificate for the at least one camera based on the current certificate information; and/or
optionally, wherein generating the certificates is based on the certificate authority agent process receiving, from the multiple cameras, a request for the certificate.

13. The computer-implemented method of any of claims 9 to 12, wherein the node executing the agent process is a network video recorder that communicates with the multiple cameras in the same subnetwork and an additional set of multiple cameras in a different subnetwork, and further comprising providing, by the agent process, the configuration update to a different controller camera in the different subnetwork for distribution to each camera in the additional set of multiple cameras;
optionally, wherein the agent process also executes on the controller camera and the different controller camera as a redundant agent process.

14. The computer-implemented method of any of claims 9 to 13, wherein the node executing the agent process is a video management system that communicates with multiple network video recorders that each communicate with a set of cameras, wherein providing, by the agent process, the configuration update includes providing the configuration update to the multiple network video recorders that each provide the configuration update to the set of cameras;
optionally, wherein the agent process also executes on the multiple network video recorders as a redundant agent process.

15. The computer-implemented method of any of claims 9 to 14, wherein the configuration update includes a firmware update for each of the multiple cameras.
